# FASCICULE DE BREVET EUROPEEN

(11) **EP 2 414 230 B1**
(45) Date de publication et mention de la délivrance du brevet: **04.09.2013**
(21) Numéro de dépôt: 10711686.5
(22) Date de dépôt: 30.03.2010
(51) Int. Cl.: G01L 5/10, B64C 13/08, B64C 13/30, B64C 13/46

(54) **SYSTÈME DE COMMANDE DE VOL POUR AÉRONEF, COMPORTANT UNE BIELLETTE POURVUE DE CAPTEUR**
FLUGSTEUERUNGSSYSTEM EINES FLUGZEUGS MIT MIT EINEM SENSOR VERSEHENER VERBINDUNGSSTANGE
AIRCRAFT FLIGHT CONTROL SYSTEM COMPRISING A CONNECTING ROD PROVIDED WITH A SENSOR

(30) Priorité: 30.03.2009 FR 0901527
(43) Date de publication de la demande: 08.02.2012
(73) Titulaire: SAGEM Défense Sécurité, 75015 Paris (FR)
(72) Inventeur: DUYCK, Arnaud, 75015 Paris (FR); TILLY, Bruno, 75015 Paris (FR); GUILLOT, François, 75015 Paris (FR); PIATON, Jérôme, 75015 Paris (FR)
(74) Mandataire: Lavialle, Bruno François Stéphane
(86) Numéro de dépôt international: PCT/EP2010/054224
(87) Numéro de publication internationale: WO 2010/112513

(56) Documents cités:
- EP-A1- 2 067 697
- EP-A2- 1 065 487
- WO-A1-02/40345
- DE-A1- 10 303 706
- US-A- 5 522 568
- US-A1- 2005 178 215
- US-A1- 2007 034 023

## Description

La présente invention concerne un système de commande, par exemple un système de commande de vol pour aéronef destiné par exemple à la commande des gouvernes de l'aéronef. Un exemple de l'art antérieur est fourni par le document EP 1065487.

Un tel système de commande comprend une chaîne de transmission dont les éléments sont agencés et reliés les uns aux autres de manière à transmettre les mouvements d'un organe de pilotage, comme le manche, aux gouvernes. Un des éléments de transmission est par exemple une biellette de transmission d'effort actionnant une servovalve d'assistance hydraulique. La chaîne de transmission comprend en outre un ressort permettant un retour de force qui soit perceptible via le manche par le pilote et proportionnel à l'effort exercé par ce dernier sur le manche.

Il a été envisagé d'utiliser un moteur électrique pour à la fois servir de compensateur, remplacer la servovalve et le ressort. La servovalve étant supprimée, le moteur doit alors assurer la fonction d'assistance requise. La commande du moteur électrique à ces fins nécessite de disposer de mesures des efforts exercés par le pilote sur le manche.

Un moyen d'obtenir de telles mesures est de fixer des jauges de contrainte sur la biellette de transmission pour mesurer les efforts exercés sur celle-ci. Toutefois, de telles jauges de contrainte doivent être collées directement sur la biellette pour assurer leur fonction et ce mode de fixation ne présente par des gages de fiabilité et de durabilité suffisants dans certaines applications, notamment aéronautiques.

Il est également connu de ménager dans le corps de la biellette des zones élastiquement déformables autorisant un déplacement relatif de deux portions du corps de la biellette qui sont associées à un élément de détection de ce déplacement. La structure des dispositifs connus ne permet pas de protéger de manière simple et efficace le capteur des agressions extérieures.

Un but de l'invention est de remédier au moins partiellement aux inconvénients précités.

A cet effet, on prévoit, selon l'invention, un système de commande, notamment de vol pour aéronef, comprenant une chaîne de transmission avec une biellette de transmission d'effort, la biellette comportant un corps ayant au moins un logement d'extrémité recevant à coulissement une tige d'attelage de la biellette à un élément adjacent de la chaîne de transmission, le logement étant obturé par un organe d'épreuve, déformable élastiquement, qui est traversé par la tige et qui a un pourtour interne fixé à la tige et un pourtour externe fixé à une paroi délimitant le logement d'extrémité, et dans le logement d'extrémité est reçu au moins un capteur de déplacement relatif de la tige et du corps.

L'organe d'épreuve est l'élément dont la raideur permet de rapporter l'amplitude du déplacement de la tige (par rapport au corps) à l'effort exercé sur la tige. L'organe d'épreuve assure une deuxième fonction, à savoir obturer le logement recevant le capteur, de manière qu'il limite la mise en présence du capteur avec l'humidité ambiante ou des poussières et autres saletés dont l'accumulation pourrait entraîner un dysfonctionnement du capteur.

De préférence, la biellette comporte deux logements d'extrémité qui reçoivent chacun un capteur et une tige d'attelage et qui sont obturés chacun par un organe d'épreuve.

Il est ainsi prévu une redondance des éléments de mesure limitant le risque d'une défaillance totale du système de mesure.

Selon un mode de réalisation particulier, l'organe d'épreuve comprend une bague interne et une bague externe coaxiales l'une à l'autre et reliées l'une à l'autre par un voile annulaire élastiquement déformable, la bague interne étant montée sur la tige et la bague externe étant montée dans la paroi du logement.

L'organe d'épreuve a ainsi une structure simple.

De préférence, l'organe d'épreuve comprend, au moins une paroi annulaire rigide s'étendant parallèlement au voile en ayant un pourtour externe formant une butée latérale à un déplacement relatif de la bague externe par rapport à la bague interne et, avantageusement, l'organe d'épreuve comprend deux parois annulaires rigides s'étendant de part et d'autre du voile.

Ainsi, si le voile venait à casser, les butées assureraient la transmission de l'effort permettant à la biellette d'assurer sa fonction en maintenant la continuité de la chaîne de transmission.

Selon une caractéristique particulière, la paroi du logement appartient à une cartouche qui est reçue avec un jeu radial dans une cavité ménagée dans une des extrémités du corps et qui a une extrémité fixée au corps au voisinage de l'organe d'épreuve.

L'effort exercé sur l'organe d'épreuve par la tige est transmis au corps via la cartouche au niveau de l'extrémité fixée de celle-ci tandis que le reste de la cartouche n'est pas soumis à cet effort. Le capteur est de la sorte préservé de cet effort limitant les contraintes mécaniques subies par celui-ci. Les contraintes liées au montage et aux dilatations différentielles sont également limitées.

D'autres caractéristiques et avantages de l'invention ressortiront à la lecture de la description qui suit d'un mode de réalisation particulier non limitatif de l'invention.

Il sera fait référence aux dessins annexés, parmi lesquels :

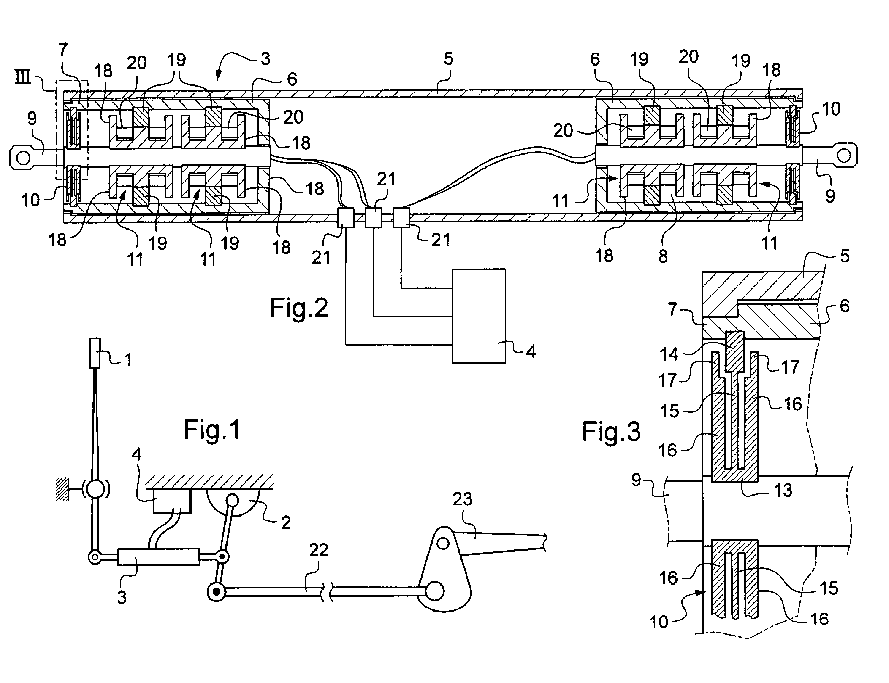

- la figure 1 est une vue schématique de la chaîne de transmission du système de commande conforme à l'invention,
- la figure 2 est une vue schématique en coupe longitudinale de la biellette de l'invention,
- la figure 3 est une vue agrandie de la zone III de la figure 2.

En référence aux figures, le système de commande conforme à l'invention comprend une chaîne de transmission d'effort qui comporte un manche 1 relié à un moteur électrique 2 par une biellette 3.

Le moteur électrique 2 actionne directement ou indirectement (par une tringlerie par exemple) au moins une gouverne 23 et est relié à une unité de commande 4. L'unité de commande 4 est agencée et programmée pour commander le moteur 2 de telle manière que celui-ci exerce les fonctions d'assistance à l'actionnement des gouvernes, de retour d'effort vers le pilote et de compensateur (ou « trim » en anglais) permettant le réglage de la position neutre du manche (position dans laquelle le manche reste sans action du pilote). La tringlerie, l'unité de commande 4 et le moteur électrique 3 sont connus en eux-mêmes et ne seront pas plus détaillés ici.

La biellette 3 comporte un corps 5, tubulaire, ayant deux portions d'extrémité dans chacune desquelles est montée une cartouche 6. Chaque cartouche 6 est délimitée par une paroi cylindrique et possède une extrémité 7 fixée au bord de la portion d'extrémité correspondante du corps 5 tandis que le reste de la cartouche 6 est reçu avec un jeu radial dans le corps 5. La cartouche 6 est fixée de manière à être immobilisée axialement et radialement par rapport au corps 5. Cette fixation peut être réalisée de manière démontable ou non par exemple par vissage, clavetage, soudage, sertissage, boulonnage... Chaque cartouche 6 délimite un logement 8 recevant une tige d'attelage 9, un organe d'épreuve 10 et des capteurs 11.

Chaque tige d'attelage 9 est reçue à coulissement dans le logement 8 de la cartouche 6 et possède ici une extrémité pourvue d'un oeil pour son attelage à un élément adjacent de la chaîne de transmission et une extrémité lisse reçue à coulissement dans un palier de guidage ménagé dans une cloison de fond 12 de la cartouche 6.

Chaque organe d'épreuve 10 comprend une bague interne 13 et une bague externe 14 coaxiales l'une à l'autre et reliées l'une à l'autre par un voile 15 annulaire et élastiquement déformable. La bague interne 13 est fixée sur la tige d'attelage 9 et la bague externe 14 est fixée dans l'extrémité 7 de la cartouche 6 de sorte que chaque organe d'épreuve obture le logement 8 de la cartouche 6 dans laquelle il est monté. Les bagues interne 13 et externe 14 sont fixées de manière à être immobilisées axialement par rapport à la tige d'attelage 9 et à la cartouche 6 respectivement. Cette fixation peut être réalisée de manière démontable ou non par exemple par vissage, clavetage, soudage, sertissage, boulonnage... Des moyens additionnels d'étanchéité peuvent en outre être prévu entre, d'une part, les bagues interne 13 et externe 14 et, d'autre part, la tige d'attelage 9 et la cartouche 6 respectivement, en fonction de la qualité de l'étanchéité souhaitée.

Le voile 15 est dimensionné pour transmettre un effort axial de la bague externe 14 vers la bague interne 13 et inversement de telle manière qu'un effort de valeur donnée entraîne un déplacement relatif prédéterminé de la bague interne 13 et de la bague externe 14. L'organe d'épreuve permet ainsi d'introduire une correspondance fixe et prédéterminée entre le déplacement relatif et l'effort l'ayant provoqué.

Chaque organe d'épreuve 10 comprend en outre deux parois latérales 16, annulaires et rigides, s'étendant parallèlement au voile 15, de part et d'autre de celui-ci, en ayant un pourtour interne solidaire de la bague interne 13 et un pourtour externe 17 formant une butée latérale à un déplacement relatif de la bague externe 14 par rapport à la bague interne 13. Les pourtours externes 17 des parois latérales 16 s'étendent de chaque côté de la bague externe 14 pour contacter celle-ci en cas de détérioration du voile 15.

Les capteurs 11 sont des transformateurs différentiels linéaires (ou LVDT pour « Linear Variable Differential Transformer ») qui sont connus en eux-mêmes et qui comprennent un noyau magnétique 18 annulaire qui est fixé sur la tige d'attelage 9 et un noyau magnétique 19 annulaire solidaire de la cartouche 6. Un enroulement de mesure 20 s'étend autour du noyau magnétique 18 et est relié à des connecteurs 21 débouchant à l'extérieur du corps 5 pour être reliés via des conducteurs électriques 22 à l'unité de commande 4.

On notera que la tige d'attelage 9 et la cartouche 6 sont réalisées dans des matériaux identiques ou ayant le même coefficient de dilatation thermique afin d'éviter qu'un différentiel de dilatation ne viennent fausser les mesures.

L'exploitation, par l'unité de commande 4, des signaux représentatifs du déplacement relatif qui sont fournis par les capteurs 11 est connue en elle-même et n'est pas détaillée ici.

Bien entendu, l'invention n'est pas limitée au mode de réalisation décrit mais englobe toute variante entrant dans le champ de l'invention telle que définie par les revendications.

La biellette peut ne comprendre qu'un capteur ou deux capteurs disposés du même côté ou un capteur à chaque extrémité, ou bien encore trois capteurs ou plus de quatre.

Le logement 8 peut être réalisé directement dans le corps 5.

La cartouche 6 peut être fixée différemment dans le corps 5, par exemple sur toute sa longueur.

D'autres applications du système de commande sont envisageables et par exemple la commande d'organes de direction d'un véhicule roulant ou flottant.

## Revendications

1. Système de commande, notamment de vol pour aéronef, comprenant une chaîne de transmission avec une biellette (3) de transmission d'effort, la biellette comportant un corps (5) ayant au moins un logement (8) d'extrémité recevant à coulissement une tige d'attelage (9) de la biellette à un élément adjacent de la chaîne de transmission, **caractérisé en ce que** le logement est obturé par un organe d'épreuve (10), déformable élastiquement, qui est traversé par la tige et qui a un pourtour interne fixé à la tige et un pourtour externe fixé à une paroi délimitant le logement d'extrémité, et **en ce que** dans le logement d'extrémité est reçu au moins un capteur (11) de déplacement relatif de la tige et du corps.

2. Système selon la revendication 1, dans lequel la biellette (3) comporte deux logements d'extrémité (8) qui reçoivent chacun un capteur (11) et une tige d'attelage (9) et qui sont obturés chacun par un organe d'épreuve (10).

3. Système selon la revendication 1, dans lequel l'organe d'épreuve (10) comprend une bague interne (13) et une bague externe (14) coaxiales l'une à l'autre et reliées l'une à l'autre par un voile annulaire (15) élastiquement déformable, la bague interne étant montée sur la tige (9) et la bague externe étant montée dans la paroi du logement (8).

4. Système selon la revendication 3, dans lequel l'organe d'épreuve (10) comprend, au moins une paroi annulaire rigide (16) s'étendant parallèlement au voile (15) en ayant un pourtour externe formant une butée latérale à un déplacement relatif de la bague externe (14) par rapport à la bague interne (13).

5. Système selon la revendication 4, dans lequel l'organe d'épreuve (10) comprend deux parois annulaires rigides (16) s'étendant de part et d'autre du voile (15).

6. Système selon la revendication 3, dans lequel la paroi du logement (8) appartient à une cartouche (6) qui est reçue avec un jeu radial dans une cavité ménagée dans une des extrémités du corps (5) et qui a une extrémité fixée au corps au voisinage de l'organe d'épreuve (10).

7. Système selon la revendication 1, dans lequel le capteur (11) comprend un transformateur différentiel linéaire comportant au moins un enroulement fixé à la tige (9) ou à la paroi du logement (8) et un noyau fixé à la paroi du logement ou à la tige.

8. Système selon la revendication 1, dans lequel le logement d'extrémité (8) reçoit au moins deux capteurs (11).

## Patentansprüche

1. Steuerungssystem, insbesondere zur Steuerung des Flugs eines Luftfahrzeugs, umfassend eine Übertragungskette mit einer Gelenkstange (3) zur Kraftübertragung, wobei die Gelenkstange ein Gehäuse (5) mit mindestens einer Endaufnahme (8) zum gleitenden Aufnehmen einer Verbindungsstange (9) zur Verbindung der Gelenkstange mit einem zu der Übertragungskette benachbarten Element hat, **dadurch gekennzeichnet, dass** die Aufnahme durch ein elastisch verformbares Dichtungsorgan (10) verschlossen ist, das von der Stange durchsetzt ist und das einen Innenumfang hat, der an der Stange befestigt ist, und einen Außenumfang, der an einer Wand befestigt ist, die die Endaufnahme begrenzt, und dadurch, dass in der Endaufnahme mindestens ein Sensor (11) zum Erfassen einer relativen Verlagerung der Stange und des Gehäuses aufgenommen ist.

2. System nach Anspruch 1, bei dem die Gelenkstange (3) zwei Endaufnahmen (8) umfasst, die jeweils einen Sensor (11) und eine Verbindungsstange (9) aufnehmen und die jeweils durch ein Dichtungsorgan (10) verschlossen sind.

3. System nach Anspruch 1, bei dem das Dichtungsorgan (10) einen Innenring (13) und einen Außenring (14) umfasst, die koaxial zueinander sind und durch einen ringförmigen Steg (15) miteinander verbunden sind, der elastisch verformbar ist, wobei der Innenring an der Stange (9) und der Außenring in der Wand der Aufnahme (8) angeordnet ist.

4. System nach Anspruch 3, bei dem das Dichtungsorgan (10) mindestens eine starre ringförmige Wand (16) umfasst, die sich parallel zum Steg (15) erstreckt, indem sie einen Außenumfang aufweist, der einen seitlichen Anschlag bei einer relativen Verlagerung des Außenrings (14) relativ zum Innenring (13) bildet.

5. System nach Anspruch 4, bei dem das Dichtungsorgan (10) zwei starre ringförmige Wände (16) bildet, die sich auf beiden Seiten des Stegs (15) erstrecken.

6. System nach Anspruch 3, bei dem die Wand der Aufnahme (8) zu einer Kartusche (6) gehört, die mit radialem Spiel in einen in einem der Gehäuseenden (5) ausgebildeten Hohlraum aufgenommen ist und die ein Ende aufweist, das am Gehäuse in der Nähe des Dichtungsorgans (10) befestigt ist.

7. System nach Anspruch 1, bei dem der Sensor (11) einen linearen Differentialtransformator mit mindestens einer an der Stange (9) oder an der Wand der Aufnahme (8) befestigten Wicklung sowie einen an der Wand der Aufnahme oder an der Stange befestigten Kern umfasst.

8. System nach Anspruch 1, bei dem die Endaufnahme (8) mindestens zwei Sensoren (11) aufnimmt.

## Claims

1. A control system, in particular an aircraft flight control system, comprising a linkage with a force-transmission link (3), the link comprising a body (5) having at least one end housing (8) slidably receiving a coupling rod (9) for coupling the link to an adjacent element of the linkage, the system being **characterized in that** the housing is closed by an elastically-deformable test member (10) through which the rod passes and that has an inner periphery fastened to the rod and an outer periphery fastened to a wall defining the end housing, and **in that** the end housing receives at least one sensor (11) for sensing relative movement between the rod and the body.

2. A system according to claim 1, wherein the link (3) has two end housings (8) each receiving a sensor (11) and a coupling rod (9) and each closed by a respective test member (10).

3. A system according to claim 1, wherein the test member (10) comprises an inner ring (13) coaxially inside an outer ring (14) and connected together by an elastically deformable annular web (15), the inner ring being mounted on the rod (9) and the outer ring being mounted in the wall of the housing (8).

4. A system according to claim 3, wherein the test member (10) includes at least one rigid annular wall (16) extending parallel to the web (15) and having an outer periphery forming a lateral abutment against relative movement between the outer ring (14) and the inner ring (13).

5. A system according to claim 4, wherein the test member (10) has two rigid annular walls (16) extending on either side of the web (15).

6. A system according to claim 3, wherein the wall of the housing (8) forms part of a cartridge (6) that is received with radial clearance in a cavity formed in one of the ends of the body (5), and that has one end fastened to the body in the vicinity of the test member (10).

7. A system according to claim 1, wherein the sensor (11) comprises a linear variable differential transformer having at least one winding fastened to the rod (9) or to the wall of the housing (8) and a core fastened to the wall of the housing or to the rod.

8. A system according to claim 1, wherein the end housing (8) receives at least two sensors (11).
